# EUROPÄISCHE PATENTANMELDUNG

(11) **EP 0 521 257 A2**
(43) Veröffentlichungstag der Anmeldung: **07.01.1993**
(21) Anmeldenummer: 92107477.9
(22) Anmeldetag: 02.05.1992
(51) Int. Cl.: B64F 1/22

(54) **Schleppfahrzeug zum Bugsieren eines Flugzeuges ohne Schleppstange**

(30) Priorität: 02.07.1991 DE 4121793
(71) Anmelder: MAN Gutehoffnungshütte Aktiengesellschaft, 46122 Oberhausen (DE)
(72) Erfinder: Torsten Michaelsen, Lars, Dipl.-Ing., W-5810 Herdecke (DE)

(57) **Zusammenfassung**

Die Erfindung betrifft ein Schleppfahrzeug mit eigenem Fahrantrieb und ohne Schleppstange zum Manövrieren eines Flugzeuges innerhalb eines Flughafengeländes.

Im Gegensatz zu den bekannten Flugzeugschleppern dieser Gattung besitzt der erfindungsgemäße Schlepper an Bord keinen Bedienungsstandort (Fahrerkabine oder dgl.) und keine Bedienungsperson, sondern die Antriebe für die Fahr-, Hub-, Greif- und Einzugbewegungen des Flugzeugschleppers werden von einer außerhalb des Schleppers befindlichen Person, die mit einem Steuergerät ausgestattet ist, über Kabel oder Funk gesteuert.

## Beschreibung

Die Erfindung betrifft ein Schleppfahrzeug mit eigenem Fahrantrieb zum Bugsieren eines Flugzeuges ohne Schleppstange mit einem Räderfahrgestell, das eine Hubvorrichtung und eine mit dieser zusammenwirkende Greif- und Einzugsvorrichtung mit entsprechenden Antrieben zur Aufnahme des Bugfahrwerkes des Flugzeuges aufweist.

Stangenlose Schleppfahrzeuge zum Bugsieren von Flugzeugen für Flugzeugbewegungen auf Flugplätzen sind seit Mitte der 80er Jahre bekannt. Sie werden inzwischen sowohl für Operationen wie das Push-back, Schleppmanöver in Flugzeugwerften, Hallen und auch als Schleppfahrzeuge für längere Strecken innerhalb des Flughafengeländes benutzt.

Bei allen bisher im Einsatz befindlichen Flugzeugschleppern ohne Schleppstange ist es üblich, daß das Schleppfahrzeug von einer an Bord des Fahrzeuges befindlichen Bedienungsperson gefahren wird. Diese Bedienungsperson ist selbstverständlich auch zuständig für die einzelnen Operationen zur Aufnahme des Bugfahrwerkes und das Absetzen des Bugfahrwerkes nach Ende des Schleppvorganges. Zusätzlich ist aber in der Regel aus Sicherheitsgründen eine zweite Person erforderlich, nämlich der abfertigende Mechaniker, im Fachjargon als SWQ bezeichnet, der sich in der Nähe vom Schleppfahrzeug und zu manövrierenden Flugzeug aufhält, Kabelsprechverbindung zum Piloten unterhält und dem Fahrer des Flugzeugschleppers mittels Handzeichen Instruktionen erteilt hinsichtlich der vorzunehmenden Operationen zur Aufnahme des Flugzeuges auf das Fahrzeug usw., weil der Fahrer auf dem Schleppfahrzeug von der Fahrerkabine aus nicht zu jeder Zeit einen exakten Überblick über alle Vorgänge während des Flugzeugaufnahme und -Abgabevorganges haben kann.

Aufgabe der Erfindung ist es, den Betrieb von Flugzeugschleppern ohne Schleppstange einfacher und sicherer zu gestalten. Zugleich soll das Schleppfahrzeug in seiner Bauform vereinfacht werden.

Diese Aufgaben werden erfindungsgemäß in der Weise gelöst, wie es die Merkmale des Patentanspruchs angeben.

Der mannlose Flugzeugschlepper ist in erster Linie für den Einsatz als Push-back-Fahrzeug gedacht, d.h. für den Transport von Flugzeugen von den Flugsteigen zum Rollfeld. In diesem Fall benötigt man für das Schleppfahrzeug nur einen Fahrantrieb, mit dem eine Fahrgeschwindigkeit von 0 - 10 km/h erreicht werden kann. Bei dem ferngesteuerten Flugzeugschlepper ohne Schleppstange wird der außerhalb des Schleppers postierten Bedienungsperson ein optimaler Blickkontakt sowohl auf das Flugzeug als auch auf das Schleppfahrzeug ermöglicht, so daß eine schnelle und sichere Durchführung aller Bewegungsvorgänge gewährleistet ist.

Grundsätzlich ist es auch möglich, Schleppfahrzeuge, die nach der Erfindung von einer einzigen Person außerhalb des Fahrzeuges über Kabel oder Funk gesteuert werden, für den Schleppeinsatz über größere Entfernungen zu konzipieren, d.h. diese Fahrzeuge mit Fahrantrieben auszurüsten, mit denen Geschwindigkeiten von bis zu 25 km/h erzielt werden. Das erfindungsgemäße Prinzip läßt sich daher generell bei mannlosen Flugzeugschleppern ohne Schleppstange anwenden unabhängig von dem jeweils vorgesehenen Aufnahme- und Absetzkonzept für das Bugradfahrwerk.

Die einzige Patentfigur zeigt die Seitenansicht eines erfindungsgemäßen Flugzeugschleppers mit aufgesatteltem Bugfahrwerk eines Flugzeuges.

Auf die Darstellung von konstruktiven Einzelheiten wurde verzichtet, da lediglich rein schematisch zu zeigen ist, daß das Schleppfahrzeug keine Fahrerkabine besitzt und die Bedienung des Fahrzeuges von einer Bedienungsperson, die sich in der Nähe des Fahrzeuges befindet mit Hilfe eines Steuergerätes, das über Kabel oder Funk mit den Antrieben an Bord des Schleppfahrzeuges verbunden ist, erfolgt.

Der Fahrantrieb des Schleppfahrzeuges kann ein Dieselmotor oder auch ein Elektromotor sein. Im Falle eines Elektroantriebes kann die Stromversorgung in bekannter Weise über ein Schleppkabel oder über Batterie erfolgen. Elektroantrieb kommt in der Regel jedoch nur für Flugzeugschlepper in Betracht, die für den Push-back-Einsatz vorgesehen sind, d.h. für kurze Fahrstrecken.

Das Fahrgestell des Flugzeugschleppers (1) ist mit (2) bezeichnet. Die Vorderachse (3) ist die Lenkachse, während die Hinterachse (4) starr ist. Der Antriebsmotor (5) befindet sich hinter der Vorderachse (3). Das Fahrgestell (2) weist einen gabelförmigen Aufnahmeraum (6) auf, der zum Heck, d.h. hinter der Hinterachse (4), eine Aufnahmeöffnung (7) für das Bugfahrwerk (8) des (nicht dargestellten) Flugzeuges aufweist. Auf die Darstellung der Hub-, Greif- und Einzugsvorrichtung für das Bugfahrwerk wurde verzichtet. Hier kann beispielsweise auf die Ausbildung eines Flugzeugschleppers nach der EP- 0 269 685 B1 verwiesen werden.

Die Steuerung des Flugzeugschleppers (1) erfolgt erfindungsgemäß durch eine Bedienungsperson (9), die sich in der Nähe des Flugzeugschleppers aufhält. Diese Bedienungsperson kann über ein Steuergerät (10) alle notwendigen Funktionen am Flugzeugschlepper steuern. Im Ausführungsbeispiel ist das Steuergerät (10) über ein Kabel (11) mit dem Flugzeugschlepper verbunden. Anstelle einer Übertragung über Kabel (11) kann auch eine Übertragung aller Signale per Funk erfolgen.

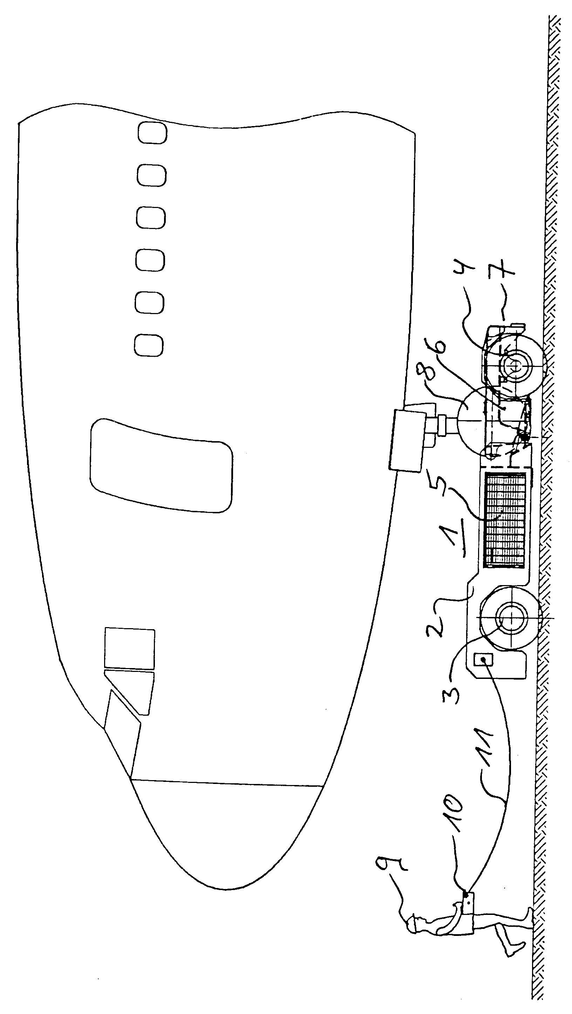

## Patentansprüche

1. Schleppfahrzeug mit eigenem Fahrantrieb zum Bugsieren eines Flugzeuges ohne Schleppstange mit einem Räderfahrgestell, das eine Hubvorrichtung und eine mit dieser zusammenwirkende Greif- und Einzugsvorrichtung mit entsprechenden Antrieben zur Aufnahme des Bugfahrwerkes des Flugzeuges aufweist,
dadurch gekennzeichnet,
daß sich an Bord des Schleppfahrzeuges (1) kein Bedienungsstandort (Fahrerkabine oder dgl.) und keine Bedienungsperson befindet und daß durch eine sich in Sichtnähe vom Schleppfahrzeug (1) und zu bugsierenden Flugzeug aufhaltende Bedienungsperson (9) mit Hilfe eines Steuergerätes (10) über Kabel (11) oder Funk die Antriebe (5) für die Fahrbewegungen und die Hub-, Greif- und Einzugvorrichtungen gesteuert werden.
